# EUROPEAN PATENT SPECIFICATION

(11) **EP 4 569 681 B1**
(45) Date of publication and mention of the grant of the patent: **04.11.2026**
(21) Application number: 22765504.0
(22) Date of filing: 12.08.2022
(51) Int. Cl.: H04L 5/00

(54) **METHODS AND DEVICES FOR UPLINK TRANSMISSION**
VERFAHREN UND VORRICHTUNGEN ZUR UPLINK-ÜBERTRAGUNG
PROCÉDÉS ET DISPOSITIFS DE TRANSMISSION EN LIAISON MONTANTE

(43) Date of publication of application: 18.06.2025
(73) Proprietor: Nokia Technologies Oy, 02610 Espoo (FI)
(72) Inventor: KOSKELA, Timo, 90670 Oulu (FI); KARJALAINEN, Juha Pekka, 88600 Sotkamo (FI); ENESCU, Mihai, 02200 Espoo (FI); HAKOLA, Sami-Jukka, 90450 Kempele (FI)
(74) Representative: Papula Oy
(86) International application number: PCT/EP2022/072735
(87) International publication number: WO 2024/032908

(56) References cited:
- WO-A1-2021/020847
- WO-A1-2021/217627
- WO-A1-2022/052954
- US-A1- 2021 226 754
- US-A1- 2022 272 674

## Description

### FIELD

Various example embodiments relate to the field of telecommunication and in particular, to methods, devices, apparatuses and a computer readable storage medium for uplink transmission.

### BACKGROUND

In 3rd generation partnership project 3GPP release 18, a unified transmission control indicator (TCI) state framework for multiple downlink (DL) and uplink (UL) TCI states in multiple transmission/reception point (TRP) case is studies to allow multiple indicated TCI states to be indicated, to support multiple TRPs operation. In addition, it was also proposed to facilitate simultaneous multi-panel UL transmission for higher throughput and reliability.

However, simultaneous multi-panel UL transmission in the multi-TRP system is still required to be further studied to improve energy efficiency.

WO 2021/020847 A1 (LG ELECTRONICS INC [KR]) 4 February 2021 (2021-02-04) discloses a method of transmitting, by a user equipment (UE), a physical uplink shared channel (PUSCH) in a wireless communication system is disclosed. The method comprises receiving configuration information related to the PUSCH, receiving downlink control information (DCI) scheduling the PUSCH, and transmitting the PUSCH based on the DCI. The DCI includes a specific field. Based on that the specific field represents at least one SRS resource related to a simultaneous transmission across multi-panel (ST×MP), the PUSCH is transmitted based on a plurality of panels.

### SUMMARY

In general, example embodiments of the present disclosure provide a solution for uplink multi-panel transmission.

The invention is defined by the independent claims. The dependent claims set out preferred embodiments.

### BRIEF DESCRIPTION OF THE DRAWINGS

Some example embodiments will now be described with reference to the accompanying drawings, where:
Fig. 1 illustrates an example communication network in which embodiments of the present disclosure may be implemented;
Fig. 2A illustrates an example schematic diagram for sounding reference signal (SRS) transmission according to some embodiments of the present disclosure;
Fig. 2B illustrates another example schematic diagram for SRS transmission according to some embodiments of the present disclosure;
Fig. 3 illustrates an example flowchart of a method implemented at a terminal device according to some embodiments of the present disclosure;
Fig. 4 illustrates an example simplified block diagram of an example of concurrent transmission configuration according to some embodiments of the present disclosure;
Fig. 5 illustrates another example schematic diagram for scenario in which antenna panels of a terminal device have different capabilities according to some embodiments of the present disclosure;
Fig. 6 illustrates an example simplified block diagram of an example of concurrent transmission configuration according to some embodiments of the present disclosure;
Fig. 7 illustrates an example simplified block diagram of another example of concurrent transmission configuration according to some embodiments of the present disclosure;
Fig. 8 illustrates an example simplified block diagram of another example of concurrent transmission configuration according to some embodiments of the present disclosure;
Fig. 9 illustrates an example flowchart of a method implemented at a terminal device according to some embodiments of the present disclosure;
Fig. 10 illustrates an example flowchart of a method implemented at a network device according to some embodiments of the present disclosure;
Fig. 11 illustrates an example simplified block diagram of an apparatus that is suitable for implementing embodiments of the present disclosure; and
FIG. 12 illustrates an example block diagram of an example computer readable medium in accordance with some embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band internet of things (NB-IoT) and so on. Furthermore, the communications between a terminal device and a network device in the communication network may be performed according to any suitable generation communication protocols, including, but not limited to, the third generation (3G), the fourth generation (4G), 4.5G, the fifth generation (5G), or the further sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a Mobile Station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

As used herein, the term "TRP" refers to a transmission reception point having an antenna array (with one or more antenna elements) at the terminal side located at a specific geographical location, which may be used for transmitting and receiving signals to/from the network device. Although some embodiments of the present disclosure are described with reference to two TRPs for example, these embodiments are only for the purpose of illustration and help those skilled in the art to understand and implement the present disclosure, without suggesting any limitations as to the scope of the present disclosure. It is to be understood that the present disclosure described herein can be implemented in various manners other than the ones described below.

As mentioned hereinabove, a unified transmission control indicator (TCI) state framework for multiple downlink (DL) and uplink (UL) TCI states in multiple transmission/reception point (TRP) case is studied and it was also proposed to facilitate simultaneous multi-panel UL transmission for higher throughput and reliability. However, simultaneous multi-panel UL transmission in the multi-TRP system is still required to be further studied to improve energy efficiency.

In a type of multi-TRP scheme, the transmission by UE could be configured to be performed in concurrent transmission mode. In such mode, the UE assumes two (or more) concurrent transmissions of same information, for example, same transmission block (TB), same time-frequency resources, same DMRS but transmitted on multiple antenna panels or antenna groups from the UE side. Due to the similarity to single frequency network (SFN) in transmission mode, such concurrent transmission mode may also be called as, but not limited to, for example SFN mode. In the SFN mode, the transmission rank may be one or two as one panel or antenna group is usually equipped with up to two transceiver units with dual-polarized antenna elements. Different antenna panels or antenna groups may have different capabilities in terms of how many ports can be used for transmitting on panels. In the present disclosure, antenna panels (or panels) and antenna groups (or antenna panel and antenna group) may be used exchangeable, for example if antenna panel or antenna panels is used, it may also indicate antenna group or antenna groups accordingly. In order to make the description simple, it will not be elaborated redundantly.

The inventors notice that one of the advantages of the multiple TRP operation is to provide robustness or capacity improvement for communication. To facilitate simultaneous multi-panel UL transmission for higher UL throughput/reliability, it is important to focus on multi-TRP.

In unified TCI State framework, a single TCI state can be indicated to UE, and this TCI state or RS(s) indicated by the TCI State may be used for transmission and reception assumptions for the DL transmission of for example, physical downlink control channel (PDCCH) physical downlink shared channel PDSCH, channel state indication reference signal (CSI-RS) and/or UL transmission of physical uplink control channel (PUCCH), physical uplink shared channel (PUSCH), sounding reference signal (SRS). In release 17, only one unified TCI state can be indicated to UE, i.e. either jointly for UL and DL transmissions or separately for DL and UL transmissions, the concurrent transmission (or other repetition or multi-panel transmissions) have not been feasible to be supported within the unified TCI framework. In release 18, it is aimed to support multiple (more than one, e.g. 2) indicated (unified) TCI states; however, simultaneous multi-panel UL transmission in the multi-TRP system is still required to be further studied to improve energy efficiency. Thus, , a new multi-panel uplink transmission solution is desirable.

According to embodiments of the present disclosure, there is providing a solution for TRP adaptation. In this solution, a terminal device receives transmission configuration information indicating concurrent transmissions or receptions over a same transmission resource for two or more TCI states. The terminal device performs concurrent transmissions or receptions based on the transmission configuration information. As such, new multi-panel uplink transmission solution is provided, which improves the energy efficiency.

Principle and embodiments of the present disclosure will be described in detail below with reference to the accompanying drawings. However, it is to be noted that these embodiments are illustrated as examples and not intended to limit scope of the present application in any way.

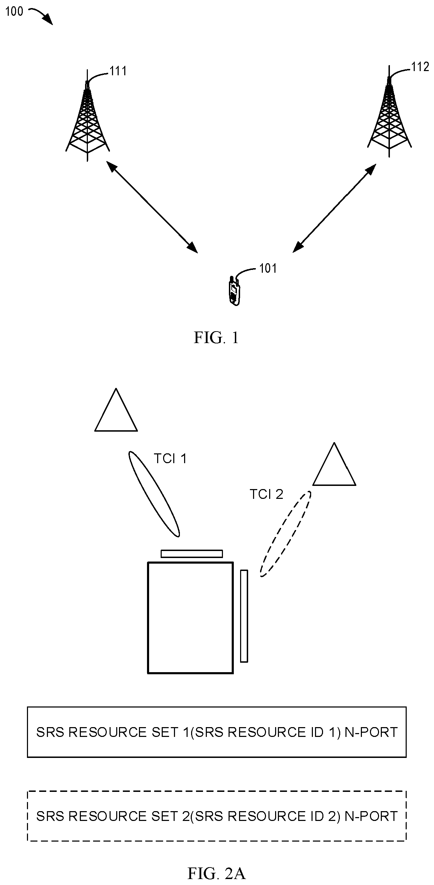

Reference is first made to Fig. 1, which illustrates an example communication system 100 in which embodiments of the present disclosure may be implemented. As illustrated in Fig. 1, the system 100 includes two network devices, such as network device 111 and network device 112. The network devices 111 and 112 may each have one respective group of antenna ports. In other words, the network devices 111 and 112 may be associated with or function as two respective TRPs, and thus sometimes they can be also referred to as TRP 111 and TRP 112 in the present disclosure. For clarity purposes, TRP 111 may be also referred to a first TRP and TRP 112 may be referred to a second TRP.

The network devices 111 and 112 may each operate using different frequency bands in both DL and UL. In communication systems, "UL" refers to a communication link in a direction from a terminal device to a network device, and "DL" refers to a communication link in a direction from the network device to the terminal device.

The system 100 also includes one or more terminal devices, such as terminal device 101. The terminal device 101 are capable of connecting, for example wirelessly, and communicating in an UL and DL with either or both of the network devices 111 and 112 depending on location of the terminal devices in the cells of the network devices 111 and 112. The terminal device 101 may be configured to be communicated with network via one or more TRPs, for example 2 TRPs. The two TRPs may be located within the same cell (intra-cell TRP) or within different cells (inter-cell TRP).

It is to be understood that in Fig. 1, the number of network devices and terminal devices is only for the purpose of illustration without suggesting any limitations. The system 100 may include any suitable number of network devices and terminal devices adapted for implementing embodiments of the present disclosure.

Communications in the communication system 100 may be implemented according to any proper communication protocol(s), comprising, but not limited to, cellular communication protocols of the third generation (3G), the fourth generation (4G) and the fifth generation (5G) or beyond, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: code fivision multiple sccess (CDMA), frequency division multiple access (FDMA), time division multiple access (TDMA), frequency division duplex (FDD), time division duplex (TDD), multiple-input multiple-output (MIMO), orthogonal frequency division multiple (OFDM), discrete fourier transform spread OFDM (DFT-s-OFDM) and/or any other technologies currently known or to be developed in the future.

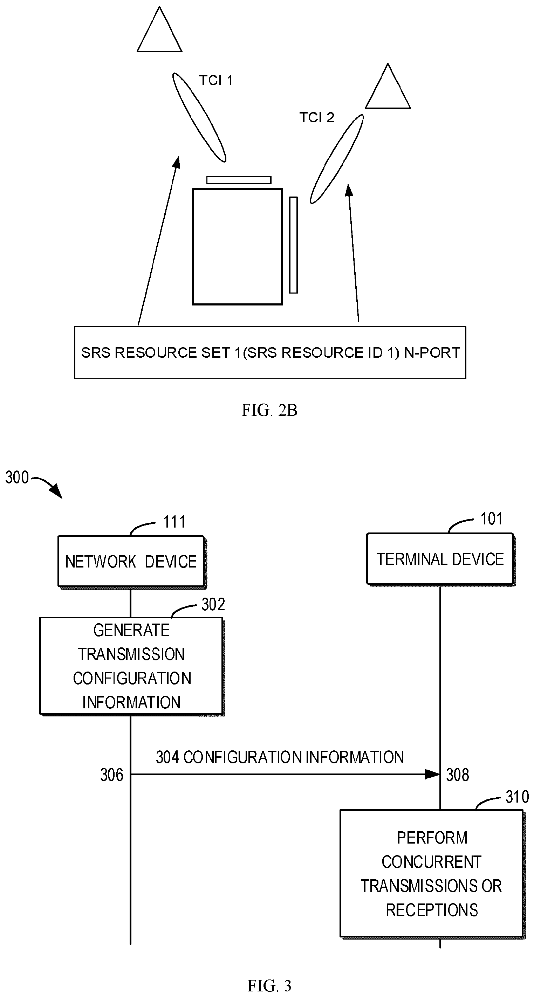

Fig. 2A shows an example of SRS transmission/reception from multiple UE panels. As an example the panel and used spatial filter (e.g. a beam) SRS transmission may also be used for downlink (multi-panel) reception. Fig. 2B shows another example of SRS transmission or reception from multiple UE panels. The UE may be configured to perform transmission in the SFN mode, the transmission in SFN mode may include the transmission over SRS resource(s) in an SRS resource set(s) in SFN manner using unified TCI State framework. More details will be described with reference to Figs. 2A and 2B.

In any of the examples (or figures) herein referring to SRS transmission, it should understood that it may refer to any other transmission of UL signals and/or channels e.g. DMRS (demodulation reference signals), PUCCH, PUSCH. These signals/channels may be associated with a TCI state.

As shown in Figs. 2A and 2B, UE may be indicated with N TCI states (N-DL TCI states. or Joint TCI states for UL and DL or N-UL TCI states for). Furthermore, UE may be configured with two SRS resource sets, and each set may include one or more SRS resources. Although Figs. 2A and 2B shows two TCI states and two SRS resource sets as an example, the number of TCI state and SRS resource set should not be construed as limitations on the scope of the present disclosure. A SRS resource set may be associated with an indicated TCI state. The indicated TCI codepoint may comprise two joint or two UL TCI states. The UE may be configured with two antenna groups; in the illustrated example, the UE have two panels. A TCI state may comprise (or is associated/configured with) one or more reference signals (e.g. SSB/CSI-RS/Tracking Reference signal). If a TCI State index/codepoint is indicated the UE assumes transmission of associated UL/DL signals or channels according to the reference signals of the TCI State. In one example a TCI state may comprise DL RS (e.g. CSI-RS) and if UE is configured to transmit SRS resource (or other UL signal/channel) according to the TCI state it may use the DL RS as at least a spatial reference for the transmission. Similarly, the same RS may be used for DL signal/channel reception (PDCCH/PDSCH). TCI State may in some cases comprise of UL RS. UE may have one or more indicated TCI states (with respective configuration of the associated DL RS).

As an example shown in Fig. 2A, in the configuration of two SRS resource sets (that may comprise of one or more SRS resources, wherein one SRS resource may be an n-port SRS resource), there could be a parameter that defines whether a SRS resource set follows a first TCI state (TCI 1) of the indicated TCI codepoint (state) or a second TCI state (TCI 2) of the indicated TCI codepoint. For example, SRS resource set 1 may be associated with TCI 1, and SRS resource set 2 may be associated with TCI 2. When SRS resource set 1 is triggered (e.g. a periodic/aperiodic/semi-persistent transmission is performed), the UE transmits SRS over the associated SRS resource in the set 1 according to TCI 1 (e.g. with spatial relation according to TCI 1). And, when SRS resource set 2 is triggered, the UE transmits SRS over the associated SRS resource in the set 2 according to TCI 2 (e.g. with spatial relation according to TCI 2). In any of the example, a codepoint may be referred as an index.

Fig. 2B illustrates another example of UL transmission mode, i.e., the SFN mode. In order to configure the SFN mode for the UE, the UE may receive an indication or a configuration from the network. Upon receiving such an indication (or configuration), the network may determine how to perform UL transmission in the SFN mode. If the UE determines to transmit SRS over the associated SRS resource in the SRS resource set 1 according to TCI 1 and TCI 2, the UE may transmit SRS over the associated SRS resource in the SRS resource set 1 according to TCI 1(e.g. with spatial relation according to TCI 1), and transmit SRS over the associated SRS resource in the set 1 according to TCI 2 (e.g. with spatial relation according to TCI 2). In other words, when the SRS resource set 1 is triggered for SFN transmission (or a concurrent transmission of same signal over multiple TCI states), UE transmits the SRS resource in the SRS resource set using the TCI states 1 and 2. Alternatively, with reference to Fig. 2A, UE may be configured to transmit the SRS resource in the SRS resource set 2 according to the two TCI States (TCI 1 and TCI 2). Whether the SRS resource set associated with TCI 1 or TCI 2 is used for SFN transmission may be configured by network and/or indicated using downlink signaling (e.g. DCI / MAC CE / RRC).

Reference is now made to Fig. 3, which shows an example of an example process 300 for the dynamic TRP adaptation according to an embodiment of the present disclosure. For the purpose of discussion, the process 300 will be described with reference to Fig. 1. The network device 111 and the terminal device 101 may be involved in the process 300 for the purpose of illustration.

In the process 300, a network device 111 generates 302 transmission configuration information indicate. The transmission configuration information indicates concurrent transmissions or receptions over a same transmission resource according to two or more transmission configuration indicator, TCI, states. Then the network device transmits 304 the transmission configuration information to the terminal device 101. Accordingly, the terminal device 101 receives 306 transmission configuration information 303 from a network device. From the transmission configuration information 303, the terminal device may learn that the network device indicates concurrent transmissions or receptions over a same transmission resource for two or more TCI states to be used.

In some embodiments, the two or more TCI states comprise a first TCI state (TCI 1) associated with a first transmission resource and a second TCI state (TCI 2) associated with a second transmission resource. The first transmission resource and the second transmission resource may include for example SRS transmission resource. One of the first transmission resource and the second transmission resource may be used as the same transmission resource over which the concurrent transmissions or receptions are performed. It should be noted that there may be an X number of indicated TCI states. Although the disclosure is described with the first and second (indicated) TCI states, the present disclosure is not limited thereto, any other numbers is applicable.

A illustrated in to configure SFN transmission mode for the UE as shown in Fig. 3, the UE may receive indication from the network device 111 to transmit using SFN scheme. Upon such indication by the network device 111, UE may determine to transmit SRS over SRS resource(s) in the first or second SRS resource set (SRS resource set 1 or SRS resource set 2) according to the two indicated TCI states.

In an example, UE may be configured with an SRS resource set (that may have one or more SRS resources). This resource set may be configured to be transmitted by the UE upon UE determining that it is configured (e.g. indicated) to perform SFN type (e.g. concurrent/simultaneous) transmission. This resource in the SRS resource set may be transmitted. The SRS resource or the SRS resource set may have a parameter that indicates that the SRS resource(s) in the SRS resource set are used for simultaneous UL transmission (e.g. SFN). Upon receiving configuration for simultaneous transmission UE determines to use the configured SRS resource for the transmission according to the configured TCI States. In some examples, the SRS resource set having the configuration for simultaneous UL transmission may be associated to one or more TCI States (e.g. it is configured to follow one or more indicated TCI states) and transmitted when simultaneous UL transmission (e.g. SFN type of transmission) is configured. In some examples an SRS resource set may be configured for simultaneous UL transmission (e.g. SFN type of transmission) without association to (indicated) TCI States and association is determined upon performing the transmission. As an example the TCI states used for transmission is determined when the transmission is triggered/configured/indicated by the network.

In an example, if UE assumes the first SRS resource set to be indicated for SFN transmission, UE assumes the transmission over the SRS resource in the first SRS resource set (having for example n-port SRS resource) on the both first and second indicated TCI state according to the first SRS resource set configuration, in which the first and second TCI states may be the indicated TCI States (e.g. using MAC CE activation and DCI beam indication).

In some embodiments, the SFN type transmission may be statically configured e.g. using RRC signalling. In some examples the SFN type transmission may be aperiodic/semi-persistent transmission wherein the SFN transmission is triggered by downlink control information (e.g. DCI/MAC CE).

In some embodiments, the same transmission resource over which the concurrent transmissions or receptions are performed may be determined as in any of the following alternative schemes.

As an example, the same transmission resource over which the concurrent transmissions or receptions are performed is determined based on an indication from the network device 111. The indication may indicate a TCI state or a transmission resource for concurrent transmissions or receptions. For example, a parameter in the TCI state may indicate whether the TCI state is a default TCI for SFN SRS transmission. A default TCI may refer to an indicated TCI state (e.g. an indicated TCI 1 or TCI 2) that will be used e.g. for determining the transmission resource (such an SRS resource set) for concurrent transmission such an SFN. In other words, if a TCI State is default TCI State for SFN SRS transmission, an SRS resource set that is configured to follow/is associated the TCI state beam indication may be used for the SFN SRS transmission. Default indicated TCI State may be an indicated TCI State associated with CORESETPoolIndex value (e.g. 0 or 1).

As another example, the same transmission resource over which the concurrent transmissions or receptions are performed is determined based on an activation order of the first TCI state and second TCI state indicated by the network device 111. For example, if the indicated TCI states are in the same TCI codepoint, the activation order of the TCI states in the TCI codepoint defines the order (first and second). For example, if a TCI state is activated first in the indicated TCI codepoint, then the SRS resource that is configured to follow the TCI state may be determined as the same transmission resource over which the concurrent transmissions or receptions are performed. In some examples, the indicated TCI State associated with the first CORESETPoolindex value (e.g. '0') may be considered as first indicated TCI state. In some examples, the indicated TCI State associated with the second CORESETPoolindex value (e.g. '1') may be considered as second indicated TCI state. In some examples, the indicated TCI State associated with the first CORESETPoolindex value == '0/1' as first indicated TCI state. In some examples, the CORESETs may be grouped using an CORESET group index or similar wherein CORESETs in a CORESET group are considered to be associated with a same indicated TCI state.

As yet another example, the same transmission resource over which the concurrent transmissions or receptions are performed is determined based on an indication order of the first TCI state and second TCI state indicated by the network device. For example, if the indicated TCI states are indicated in the different TCI codepoints (i.e. each TCI codepoint comprises a single joint TCI state or a single UL TCI state), and if one of the indicated TCI states has been indicated first in time, the SRS resource that is configured to follow the TCI state may be determined as the same transmission resource over which the concurrent transmissions or receptions are performed.

As a further example, it is also possible that ta DCI for triggering the SFN mode may further contain an explicit field that indicates which one of the TCI states in the indicated TCI codepoint is selected. In such a case, the SRS resource that is configured to follow the selected TCI state may be determined as the same transmission resource over which the concurrent transmissions or receptions are performed.

As still another example, the same transmission resource over which the concurrent transmissions or receptions are performed is determined based on a priority of the first TCI state and second TCI state. For example, if the first SRS resource set is prioritized over the second SRS resource set, the SRS resources in the first SRS resource sets would be used to transmit SRS on the overlapping symbols of other SRS resources e.g. SRS resource set associated with the second TCI state (while the SFN mode is active/configured).

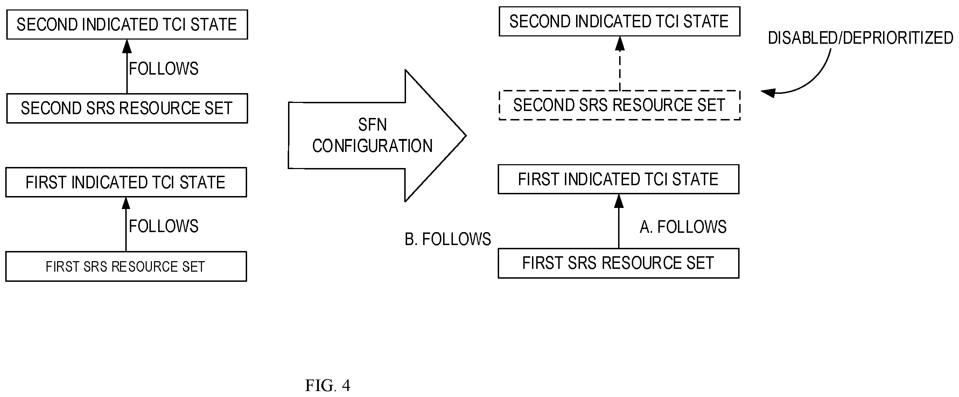

In a still yet another example, the UE may assume transmission of first and the second SRS resource sets configured to follow the indicated unified TCI states (e.g., first and second TCI states) so that the second SRS resource set is assumed not to follow indicated TCI State when the SFN transmission is performed and the first SRS resource set is assume to follow both first and second TCI State, as illustrated in Fig. 4.

Thus, in the process 300, based on the transmission configuration information, a terminal device 101 may performs 308 concurrent transmissions or receptions over the same transmission resource respectively for the two or more TCI states.

With the process above, the disclosure defines and enables dynamic use of configured TCI States and multiple SRS resource sets for concurrent transmission or independent scheduling on the TCI states (with independent SRS). And the solution enables the network to configure UE with the concurrent transmission, e.g., the SFN mode. Hence the UE may perform for example the SRS transmission from both UE TCI states (associated e.g. with one or more panels) in SFN mode/simultaneous uplink transmission.

In any of the examples herein the SFN mode may refer to simultaneous UL transmission or downlink reception. In simultaneous transmission or reception one or more TCI states and/or antenna panels may be used to transmit same (SFN) or different information (e.g. SDM).

However, it may be appreciated that concurrent SRS transmission is only taken as an example to describe the solution as disclosed in the present disclosure and the present disclosure is not limiter thereto. In some embodiments, the concurrent transmissions or receptions may comprise, in addition to SRS, transmissions or receptions of one or more of the following: data on physical uplink shared channel, PUSCH; data on physical uplink control channel, PUCCH; downlink reference signal, DL RS; data on physical downlink shared channel, PDSCH; DL/UL DMRS; or data on physical downlink control channel, PDCCH. For example, network device 111 may configure which channel to be associated with the SFN transmission scheme, e.g. PUSCH (but not for PUCCH).

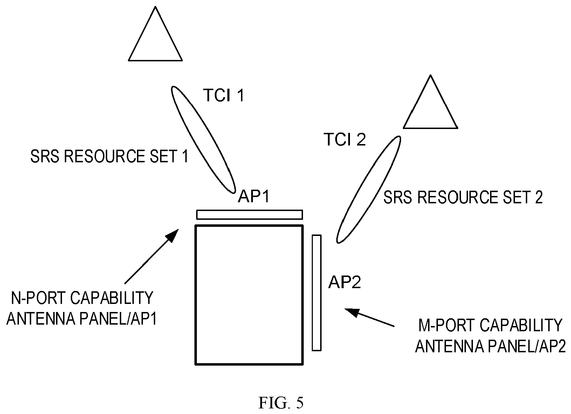

In some embodiments, UE may have an asymmetric number of ports per each panel for an SFN SRS transmission, and the following operation/logic is performed for at least one SFN SRS transmission. Fig. 5 shows illustration of antenna panels with different capabilities. More details will be described with reference to Fig. 5 below. Thus, the configured SRS resources in the SRS resource sets may have configuration of different number of ports.

In any of these embodiments, an antenna panel or panels may be referred as antenna groups. antenna group may refer to an antenna panel or multiple antenna panels. Each antenna panel may comprise of one or more antenna elements. An antenna group or groups may be associated with an index. In an example antenna panel and antenna group may be used sometimes interchangeably. The index associated with an antenna group or antenna panel may refer to e.g. capability index or any index that associates an antenna panel or panels with a capability that up to how many ports (e.g. SRS or other UL signal/channel resource ports can be transmitted on the panel or panels. A port or an antenna port may be defined such that the channel over which a symbol on the antenna port is conveyed can be inferred from the channel over which another symbol on the same antenna port is conveyed. SRS resource may thus have n-ports (N=1,2,3,4 etc..) which may refer transmission of n-signals (or n-ports) over the same transmission resources.

In some of these embodiments, the capability information associated with antenna panel(s)/group(s) may be indicated to network using uplink signaling e.g. PUCCH/PUSCH, beam reporting, MAC CE, UCI, RRC. As an example, the terminal device may be configured to report DL RS (or UL RS) and the associated capability index value. This index may indicate the capability of the antenna panel/group used for receiving the DL RS and/or used for UL transmission using the DL RS as spatial relation reference (DL RS used as reference for UL transmission).

In these embodiments, the terminal device 101 is further caused to obtain capabilities of antenna group or groups, in which the antenna group or groups may be associated with the two or more TCI states. The terminal device 101 is further caused to determine one of transmission resources associated with a TCI state corresponding to a least number of antenna ports among antenna groups.

For example, the terminal device 101 may determine if (antenna) panels associated with indicated TCI States have different capabilities in terms of maximum number of antenna ports that can be transmitted. Alternatively, the terminal device 101 may determine (e.g. without explicitly determining the panels) this based on at least one SRS resource set including at least one SRS resource and the number of ports associated with the at least one resource of at least one indicated TCI state used for transmission/reception. In these examples, e.g. AP1 /TCI1 n=1, and e.g. AP2/TCI2 m=2, where AP1 denotes antenna panel 1 and AP2 denotes antenna panel 2. AP and TCI may be used interchangeably (e.g. the TCI states are associated with antenna panels/groups but the SRS resources are associated to the TCI states). The SRS resource in first SRS resource (associated with TCI 1)set may include n-port SRS resource and The SRS resource in second SRS resource set (associated with TCI 2) may include an m-port SRS resource, as shown in Fig. 5.

In one embodiment, the TCI States may be transmitted using panels with different panel capabilities e.g. in terms of ports. In one example, the UE may be configured with SRS resources in SRS resource sets that have different number of ports. The SRS resource may be further associated with TCI States. In first example, the terminal device 101 may determine that TCI state associated with a panel/SRS resource with lower capability/configuration in terms of ports is configured to be used for SFN type transmission. The terminal device 101 selects the TCI state associated with lower capability (or the selected TCI state is associated with lower capability), and the associated SRS resource set with the selected TCI state includes the SRS resource that is to be used to transmit SRS (e.g. n-port SRS, and e.g. n=1). Then, the terminal device 101 may enable n-port SRS transmission using the first TCI state associated with the lower port/transmission capability and meanwhile the terminal device 101 transmits SRS over the same SRS resource in the resource set so as to enables n-port transmission using the second TCI state (associated with higher number of ports). Additionally, the terminal device 101 does not transmit SRS over the m-port SRS resource associated with the second TCI state.

In second example option two, the terminal device 101 determines which TCI state is associated with a panel with higher capability in terms of ports. And the terminal device 101 determines the TCI state associated with higher capability (or the selected TCI state is associated with higher capability), for example, m-port SRS resource associated with the second TCI state. Then, the terminal device 101 determines not to transmit SRS over m-port SRS resource associated with the second TCI state but transmit SRS over using only n-port transmission of the m-port SRS resource on transmission using first and second TCI state. Thus, in this case, the SRS transmission is performed based on the capability of the AP/TCI state with the lower capability but the SRS resource (the m-port resource) is selected based state associated with higher capability antenna panel / or SRS resource set with higher number of ports. In this case the n-port transmission is performed using one or more TCI States is based on the m-port SRS resource in the SRS resource set.

In other words, the m-port SRS resource in the resource set with the higher capability AP is reduced to n-port SRS resource and used for the SFN transmission i.e., the SFN transmission is performed based on the lower capability (in terms of ports) AP that participates to the joint/SFN UL transmission. In this case the selected resource is still the SRS resource

In another example, the number of SRS ports resource may be limited in this case to 1, with respect to transmissions using both APs/TCIS states for SRS transmission in the SFN mode. In another example, this information on the allowable number of SRS ports resource may be dynamically indicated (e.g. in a DCI) or preconfigured by RRC, or RRC in combination with MAC CE.

In a further example option, the terminal device 101 may select the transmission resource (such as SRS), based on which TCI state is assumed as default/leading TCI state or the configured TCI (and the associated SRS) for SRS transmission. Selection of the TCI State may be based on which TCI state is considered to be the scheduling TCI state e.g. according to which the scheduling/triggering/configuration/indication is receive Alternatively the TCI state may be indicated explicitly in a scheduling message such as DCI. Therefore, the scheduling state herein refers to a TCI state following to which the transmission configuration indication (which may also be called as a scheduling indication or a triggering indication) is received. The selected TCI state (e.g. TCI 1) is used for determining the at least one associated SRS resource in the SRS resource set and the configured number of ports. if the SRS resource set (e.g. first SRS resource set) is configured with n-port SRS resource that is associated with the selected TCI State and one or more TCI states (e.g. TCI 2) used for SFN type transmission is associated with SRS resource (or antenna panel) with higher number of ports (e.g. m-ports), UE may determine to transmit up to n-port SRS resource (first SRS resource) transmission using TCI states configured for transmission (e.g. TCI 1 and TCI 2). Alternatively, another TCI state may be selected (e.g. TCI2). If the SRS resource set (e.g. second SRS resource set) is configured with m-port SRS resource and is associated with the selected TCI State and one or more TCI states (e.g. TCI 1) used for SFN type transmission is associated with another SRS resource (or antenna panel) with lower number of ports (e.g. n-ports), UE may determine to transmit up to n-ports of the m-port SRS resource (second SRS resource) transmission using TCI states configured for transmission (e.g. TCI 1 and TCI 2). In other words, the selection of how many ports are used for SRS transmission in SFN transmission may be based on the configured ports of the SRS resources associated with the TCI states used for SFN transmission or the capability of the antenna panels used for transmission. As an example, if an m-port SRS resource in SRS resource set is configured to be used for SFN type transmission using two or more TCI States, UE determines the transmit up to the number of used ports (based on the lower) transmission capability associated with the two or more TCI states. E.g. if the TCI state associated with lower transmission capability (or the associated antenna panel) is able to support n-port transmission (and n<m) UE transmits up to n-ports of the m-port SRS resource.

By means of any of the above schemes or options, it is possible for the terminal device to determine over which transmission resource the concurrent transmission as described herein is performed.

Fig. 4 illustrates a SDM mode or independent scheduling mode on the left and SFE configuration for SRS with first and second indicated TCI state on the right. From this figure, it is seen that before receiving of SFN configuration, the UE assumes to transmit SRS over the first SRS resource set for the first TCI state and transmit SRS over the second SRS resource set for the second TCI state; while after receiving of SFN configuration, the second SRS resource set may be disabled or deprioritized so that SRS is transmitted only over the first SRS resource set but respectively following the first and second TCI state.

In some embodiments, the terminal device 101 may be caused to replace association between the second transmission resource and the second TCI state by associating a first transmission resource with the second TCI state. In an example, the association between the second transmission resource with the second TCI state may be replaced temporally. For example, the first SRS resource set replaces the second SRS resource set associated with the second TCI State, causing the UE to temporally deactivate (or defer transmission of or de-prioritize) second SRS resource set while the SFN mode is activated/configured. For example, UE assumes the transmission over first and the second SRS resource sets to be configured to follow the indicated unified TCI states (first and second) so that the second SRS resource set is assumed not to follow indicated TCI state when the SFN transmission is performed and the first SRS resource set is assumed to follow both first and second TCI State.

In one example, the SRS transmission performed according to the SFN manner as described herein is used as transmission reference for the SFN UL transmission.

In the present disclosure, the transmission configuration information may be implemented in many different ways and serval example manners will be described hereinafter.

In one embodiment, the transmission configuration information is carried by any of
- a MAC CE for specifically activating the concurrent transmissions or receptions;
- an MAC CE for activating both a transmission resource and concurrent transmissions or receptions;
- a DCI indication for specifically activating the concurrent transmissions or receptions; or
- a scheduling DCI indication for indicating a transmission scheduling and concurrent transmissions or receptions.

For example, a semi persistent SRS activation message (e.g. MAC CE) may be used to activate an SRS resource, which is tagged/flagged/configured as SFN type resource set. The tagging can be in the SRS resource set or resource or it may be provided as part of the activation message. When this SRS resource set is activated (and SFN transmission is indicated), the UE may assume the activated SRS resource transmission for the first and second TCI state.

In some embodiments, the terminal device 101 may be further caused to deactivate transmission resources other than the same transmission resource. For example, upon transmitting over first SRS resource set in SFN manner, UE may deactivate the second SRS resource set transmission while the first SRS resource set is used for transmission or reception in SFN manner. In some embodiments, the second SRS resource set transmission may be not deactivated but may continue. Therefore, the terminal device 101 is further caused to perform another transmission or reception on a transmission resource different from the same transmission resource while performing concurrent transmissions or receptions over the same transmission resource. In other words, when UE receives control information from network to transmit over first or second SRS resource set in SFN manner i.e. according to the first and second indicated TCI States, it may assume that the other SRS resource set, that is not transmitted in SFN manner, is still transmitted with associated TCI state (e.g. second SRS resource set is transmitted according to the second TCI state).

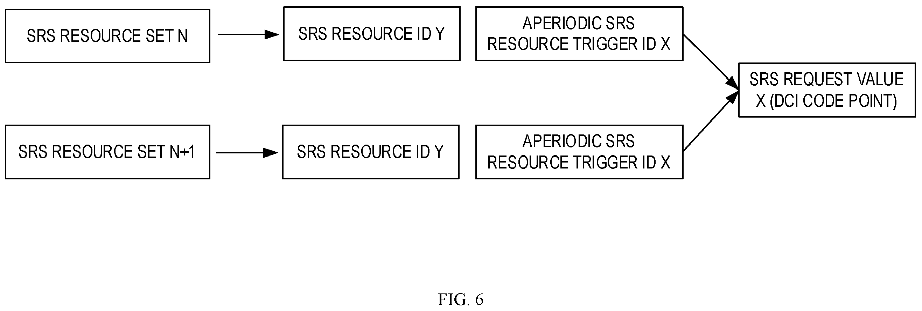

In some embodiments, the transmission configuration information may indicate periodic concurrent transmissions or receptions for RS. In some embodiments, the transmission configuration information indicates aperiodic concurrent transmissions or receptions for RS. Regarding periodic concurrent transmissions, the terminal device 101 may enable aperiodic trigger as described above. As for aperiodic concurrent transmission, there are several alternative schemes for configuring an SRS for SFN transmission using a DCI SRS request indicator is provided. More details will be described with reference to Fig. 6.

In some embodiments, the aperiodic concurrent transmissions or receptions for RS may be triggered by two pieces of configuration information. The two pieces of configuration information includes two RS requests associated with a same resource set identity ID and a same SRS request trigger value. For example, as shown in Fig. 6, for a single SRS request value indicated in the DCI message, UE may be configured with two or more different SRS resource sets with the same aperiodic SRS resource set trigger parameter value through RRC., As an example, when UE receives configuration (RRC) for SRS resource sets with same SRS resource ID (or IDs), and the resource sets are configured with same SRS resource trigger value, UE may assume the SRS transmission as SFN transmission.

In some embodiments, the aperiodic concurrent transmissions or receptions for RS may be triggered by a DCI indication with a single DCI code point value corresponding to two or more SRS resource sets. For example, when UE receives SRS request with a (single) DCI code point value associated with multiple SRS resource sets, it assumes the SRS resources to be transmitted in SFN manner. If UE is configured with unified TCI states and has been indicated with two TCI states (either joint or UL TCIs), it transmits SRS over the triggered SRS resource using the indicate TCI States, e.g. it assumes the two spatial relations for the SRS transmission based on the RSs indicated by the TCI states.

In an option, if the SRS resource set (or sets) are not configured to follow unified TCI state, the UE may assume the indicated unified TCI states (e.g. first and second indicated unified TCI states) will be used for the transmission. In another option, if one of the SRS resource sets associated with the SRS request DCI codepoint is configured to follow unified TCI state, the UE may assume two spatial relations for SFN transmission according to RS indicated by the indicated unified TCI states.

In some embodiments, the aperiodic concurrent transmissions or receptions for RS may be triggered by a DCI indication containing a SRS request value. In other words, the UE may be dynamically indicated for the aperiodic SRS transmission whether the triggered SFN transmission follows the TCI states.

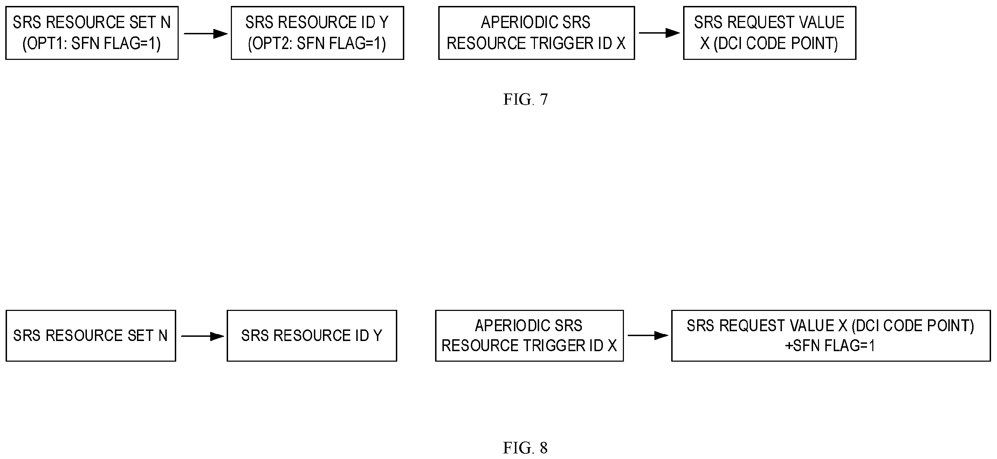

In some embodiments, the SRS request value may be associated with a RS resource or RS resource set containing a flag, as illustrated in Fig. 7. The flag may indicate that the aperiodic concurrent transmissions or receptions are performed for the RS resource or the RS resource set. For example, for a single SRS request value indicated in the DCI message, UE may be configured with a single SRS resource set (ID N) with one or more SRS resources (ID Y). In an option, configuration for the resource set may include a SFN parameter/flag to indicate whether the SRS resource is transmitted in SFN manner. In another option, configuration for the SRS resource may include a SFN parameter/flag to indicate whether the SRS resource is transmitted in SFN manner.

In some embodiments, as shown in Fig. 8, the aperiodic concurrent transmissions or receptions for RS may be triggered by a DCI indication containing a flag. The flag may indicate that aperiodic concurrent transmissions or receptions are performed for a RS resource or RS resource set. For example, if UE receives a DCI indicating an SRS request value associated with the SRS resource set, and the DCI includes SFN flag, The UE may assume the SFN transmission according to the first and second indicated unified TCI State. Otherwise The UE may assume the SRS resource set according to the associated TCI state, or according to the spatial relation that it is configured with. In other words, the SFN flag in the DCI may override or replace any spatial relation previously configured for the SRS resource.

It is to be understood that, in any of these embodiments, the TCI states referred herein may be either joint TCI states or UL TCI states.

In some embodiments, the UE may perform a different transmission mode when the SNF mode is configured. The different transmission mode comprises a spatial division multiplexing, SDM mode or an independent scheduling mode. For example, when the SFN configuration is indicated/configured not to be active for the uplink transmission, the UE may operate in the SDM mode or independent scheduling mode.

In other words, the solution further provides a switching between the SFN mode and the SDM mode/the independent scheduling mode. In some embodiments, the switching may be implemented by means of resource state configuration information.

For example, the UE may be configured with an SRS triggering state (first state) that is associated with two SRS resource sets, and the two SRS resource sets shares same SRS resource(s). In this case, one of the SRS resource sets may be configured to follow the first indicated TCI state, and the other SRS resource set may be configured to follow the second indicated TCI state. Both SRS resource sets are configured to contain the same SRS resource(s).

Moreover, the UE may also be configured with another SRS triggering state (second state) that is associated with two resource sets, and the two SRS resource sets have unique SRS resource(s) (i.e. not sharing the same SRS resource(s)). In this case, one of the SRS resource sets may be configured to follow the first indicated TCI state, and the other SRS resource set may be configured to follow the second indicated TCI state. SRS resources in each set may have different number of antenna ports reflecting e.g. capabilities of the panels. For example, one panel may have one antenna port and the other panel two antenna ports. SRS resources of the different sets may have the same configured radio resources, e.g. some resources of both sets may be the same, and so on.

In some embodiments, the transmission configuration information may comprise a first resource state indicated in the resource state configuration information. And the first resource state configuration information may configure the terminal device with a first resource state concerning two or more transmission resource sets. And, the first resource state may indicate that the two or more transmission resource sets share same transmission resources.

For example, with the first resource state indicated by the resource state configuration information, the terminal device 101 may trigger the concurrent transmission as described above for SRS and the PUSCH. In this case, the first triggering state (ID) may be indicated in the triggering DCI on PDCCH to trigger SFN based SRS transmission (or multiple SRS transmission, if there are multiple resources in the sets). SRI indicator in the scheduling DCI may indicate the reference SRS resource to be used for the SFN based PUSCH together with TPMI and RI indication (codebook based PUSCH). The UE may determine transmit spatial filters (transmit beams) of indicated TCI states associated with the SRS resource sets in which the reference SRS resource used for the PUSCH transmissions from different panels.

In some embodiments, the resource state configuration information may comprise second resource state configuration information, and the second resource state configuration information may configure the terminal device with a second resource state concerning two or more transmission resource sets. The terminal device 101 may be further caused to perform transmission or reception in a different transmission mode from the concurrent transmissions or receptions. In some embodiments, the transmission or reception in the different transmission mode may comprise a transmission or reception in one of a spatial division multiplexing, SDM mode or an independent scheduling mode.

For example, with the second resource state configuration information, the terminal device 101 may trigger the SDM transmission(s) for the SRS and the PUSCH. In this case, the second triggering state (ID) may be indicated in the triggering DCI on PDCCH to trigger SDM based SRS transmission (or multiple SRS transmission, if there are multiple resources in the sets). An SRI indicator in the scheduling DCI may indicates the reference SRS resources to be used for the SFN based PUSCH together with TPMI and RI indication (codebook based PUSCH). The UE determines transmit spatial filters (transmit/transmission beams) to be the indicated TCI states associated with the SRS resource sets in which the reference SRS resources used for the (multiple) PUSCH transmissions (from different panels).

The DCI may also have explicit information about whether which one of the SRS resource indicator (SRI) fields (if two configured to be present) or both are applied. The PUSCH transmission may be a single panel transmission when only one applied, while the PUSCH transmission may be performed in SDM mode from two panels when both are applied. According to these embodiments, dynamic switching between SDM and SFN modes for uplink multi(-panel) transmissions can be achieved.

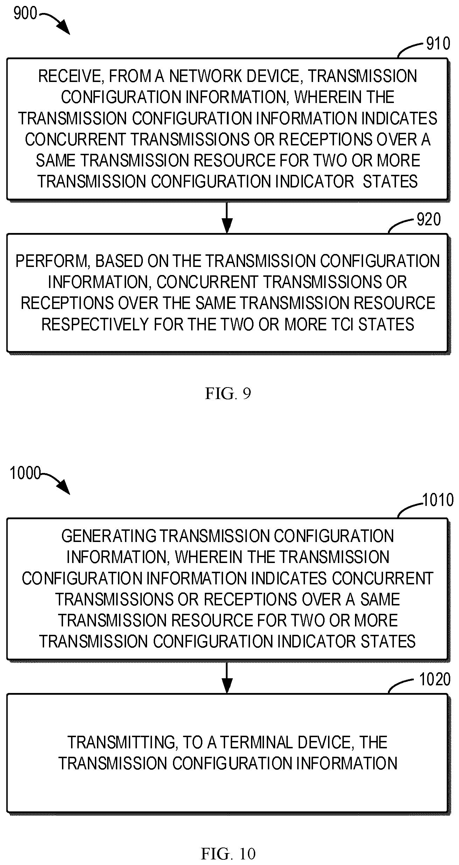

Fig. 9 shows a flowchart of an example method 900 implemented at a terminal device in accordance with some embodiments of the present disclosure. For the purpose of discussion, the method 900 will be described from the perspective of the terminal device 101 with reference to Fig. 1.

At block 910, the terminal device 101 receives transmission configuration information. And the transmission configuration information indicates concurrent transmissions or receptions over a same transmission resource for two or more TCI states. At block 920, the terminal device 101 performs, based on the transmission configuration information, concurrent transmissions or receptions over the same transmission resource respectively for the two or more TCI states.

In some embodiments, the two or more TCI states may comprise a first TCI state associated with a first transmission resource and a second TCI state associated with a second transmission resource. And one of the first transmission resource and the second transmission resource is used as the same transmission resource over which the concurrent transmissions or receptions are performed.

In some embodiments, the same transmission resource over which the concurrent transmissions or receptions are performed may be determined based on any of: an indication, from the network device, indicating a TCI state or a transmission resource for concurrent transmissions or receptions; an activation order of the first TCI state and second TCI state indicated by the network device; an indication order of the first TCI state and second TCI state indicated by the network device; a priority of the first TCI state and second TCI state..

In some embodiments, the terminal device 101 may be further caused to: replace association between the second transmission resource and the second TCI state by associating a first transmission resource with the second TCI state.

In some embodiments, the association between the second transmission resource with the second TCI state may be replaced temporally.

In some embodiments, the terminal device 101 may be further caused to: deactivate transmission resources other than the same transmission resource.

In some embodiments, the transmission configuration information may be carried by any of a medium access control control element, MAC CE, for specifically activating the concurrent transmissions or receptions; an MAC CE for activating both a transmission resource and concurrent transmissions or receptions; a DCI indication for specifically activating the concurrent transmissions or receptions; or a scheduling DCI indication for indicating a transmission scheduling and concurrent transmissions or receptions.

In some embodiments, the terminal device 101 may be further caused to: obtain capabilities of antenna group or groups, wherein the antenna group or groups are associated with the two or more TCI states; and determine one of transmission resources associated with a TCI state, wherein the TCI state associates with a least number of antenna ports among antenna groups.

In some embodiments, the transmission configuration information may indicate periodic or aperiodic concurrent transmissions or receptions for RS.

In some embodiments, the aperiodic concurrent transmissions or receptions for RS may triggered by any of the following: two pieces of configuration information, including two RS requests associated with a same reference resource set identity ID and a same SRS request trigger value; or a DCI indication with a single DCI code point value corresponding to two or more SRS resource sets; or a DCI indication containing a SRS request value , wherein the SRS request value is associated with a RS resource or RS resource set containing a flag indicating that the aperiodic concurrent transmissions or receptions are performed for the RS resource or the RS resource set; or a DCI indication containing a flag indicating that aperiodic concurrent transmissions or receptions are performed for a RS resource or RS resource set.

In some embodiments, the transmission configuration information may comprise first resource state configuration information. And the first resource state configuration information configures the terminal device with a first resource state concerning two or more transmission resource sets.

In some embodiments, the first resource state may indicate that the two or more transmission resource sets share same transmission resources.

In some embodiments, the terminal device 101 may be further caused to: obtain second resource state configuration information, and the second resource state configuration information configures the terminal device with a second resource state concerning two or more transmission resource sets; and perform transmission or reception in a different transmission mode from the concurrent transmissions or receptions.

In some embodiments, the transmission or reception in the different transmission mode may comprise a transmission or reception in one of a spatial division multiplexing, SDM mode or an independent scheduling mode.

In some embodiments, the concurrent transmissions or receptions may comprise transmissions or receptions of one or more of the following: sounding reference signal, SRS; data on physical uplink shared channel, PUSCH; data on physical uplink control channel, PUCCH; downlink reference signal, DL RS; data on physical downlink shared channel, PDSCH;UL/DL DMRS (demodulation reference signals); or data on physical downlink control channel, PDCCH.

Fig. 10 shows a flowchart of an example method 1000 implemented at a network device in accordance with some embodiments of the present disclosure. For the purpose of discussion, the method 1000 will be described from the perspective of the network device 111 with reference to Fig. 1.

At block 1010, the network device 111 generates transmission configuration information. And the transmission configuration information indicates concurrent transmissions or receptions over a same transmission resource for two or more TCI states. At block 1020, the network device 111 transmits the transmission configuration information to the terminal device 101.

In some embodiments, the two or more TCI states may comprise a first TCI state associated with a first transmission resource and a second TCI state associated with a second transmission resource. And one of the first transmission resource and the second transmission resource is used as the same transmission resource over which the concurrent transmissions or receptions are performed.

In some embodiments, the network device 111 may be further caused to: transmit, to the terminal device 101, a first indication indicating a TCI state or a transmission resource for concurrent transmissions or receptions, and the same transmission resource over which the concurrent transmissions or receptions are performed is determined based on the first indication; or transmit, to the terminal device 101, a second indication indicating priority of the transmission resource corresponding to the first TCI state and the second TCI state.

In some embodiments, the transmission configuration information may be carried by any of the following; a medium access control control element, MAC CE, for specifically activating the concurrent transmissions or receptions; a MAC CE for activating both a transmission resource and concurrent transmissions or receptions; a DCI indication for specifically activating the concurrent transmissions or receptions; or a scheduling DCI indication for indicating a transmission scheduling and concurrent transmissions or receptions.

In some embodiments, the transmission configuration information may indicate periodic or aperiodic concurrent transmissions or receptions for RS.

In some embodiments, the aperiodic concurrent transmissions or receptions for RS may be triggered by any of the following: two pieces of configuration information, including two RS requests associated with a same reference resource set identity ID and a same SRS request trigger value; or a DCI indication with a single DCI code point value corresponding to two or more SRS resource sets; or a DCI indication containing a SRS request value , wherein the SRS request value is associated with a RS resource or RS resource set containing a flag indicating that the aperiodic concurrent transmissions or receptions are performed for the RS resource or the RS resource set; or a DCI indication containing a flag indicating that aperiodic concurrent transmissions or receptions are performed for a RS resource or RS resource set.

In some embodiments, the transmission configuration information may comprise first resource state configuration information. And the first resource state configuration information configures the terminal device with a first resource state concerning two or more transmission resource sets.

In some embodiments, the first resource state may indicate that the two or more transmission resource sets share same transmission resources.

In some embodiments, the network device 111 may be further caused to: provide, to the terminal device, a second resource state configuration information. And the second resource state configuration information is used to configure the terminal device with a second resource state concerning two or more transmission resource sets so that the terminal device performs transmission or reception in a different transmission mode from the concurrent transmissions or receptions.

In some embodiments, the second resource state may indicate that the two or more transmission resource sets do not share same transmission resources.

In some embodiments, the transmission or reception in the different transmission mode may comprise a transmission or reception in one of a SDM mode or an independent scheduling mode.

In some embodiments, the concurrent transmissions or receptions comprise transmissions or receptions of one or more of the following: sounding reference signal, SRS; data on physical uplink shared channel, PUSCH; data on physical uplink control channel, PUCCH; downlink reference signal, DL RS; data on physical downlink shared channel, PDSCH; or data on physical downlink control channel, PDCCH.

In some embodiments, an apparatus capable of performing any of the method 900 (for example, the terminal device 101) may comprise means for performing the respective steps of the method 900. The means may be implemented in any suitable form. For example, the means may be implemented in a circuitry or software module.

In some embodiments, the apparatus further may comprise means for performing the steps in some embodiments of the method 900. In some embodiments, the means may comprise at least one processor; and at least one memory including computer program code, the at least one memory and computer program code configured to, with the at least one processor, cause the performance of the apparatus.

In some embodiments, an apparatus capable of performing any of the method 1000 (for example, the network device 111 may comprise means for performing the respective steps of the method 1000. The means may be implemented in any suitable form. For example, the means may be implemented in a circuitry or software module.

In some embodiments, the apparatus may further comprise means for performing the steps in some embodiments of the method 1000. In some embodiments, the means comprises at least one processor; and at least one memory including computer program code, the at least one memory and computer program code configured to, with the at least one processor, cause the performance of the apparatus.

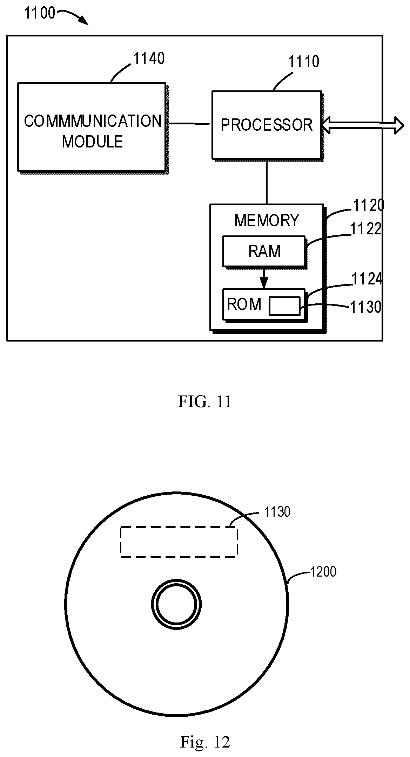

FIG. 11 is a simplified block diagram of a device 1100 that is suitable for implementing embodiments of the present disclosure. The device 1100 may be provided to implement the communication device, for example the terminal device 101, the terminal device 121, the network device 111 or the network device 112 as shown in Fig. 1. As shown, the device 1100 includes one or more processors 1110, one or more memories 1140 coupled to the processor 1110, and one or more communication modules 1140 coupled to the processor 1110.

The communication module 1140 is for bidirectional communications. The communication module 1140 has at least one antenna to facilitate communication. The communication interface may represent any interface that is necessary for communication with other network elements.

The communication module 1140 may include for example one or more transceivers. The one or more transceivers may be coupled with one or more antennas, to wirelessly transmit and receive communication signals. The one or more transceivers allow the communication device to communicate with other devices that may be wired and/or wireless. The transceiver may support one or more radio technologies. For example, the one or more transceivers may include a cellular subsystem, a WLAN subsystem, and/or a Bluetooth^{™} subsystem. In some examples, the one or more transceivers may include processors, controllers, radios, sockets, plugs, buffers, and like circuits/devices used for connecting to and communication on networks.

The processor 1110 may be of any type suitable to the local technical network and may include one or more of the following: general purpose computers, special purpose computers, microprocessors, digital signal processors (DSPs) and processors based on multicore processor architecture, as non-limiting examples. The device 1100 may have multiple processors, such as an application specific integrated circuit chip that is slaved in time to a clock which synchronizes the main processor.

The memory 1120 may include one or more non-volatile memories and one or more volatile memories. Examples of the non-volatile memories include, but are not limited to, a Read Only Memory (ROM) 1124, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 1122 and other volatile memories that will not last in the power-down duration.

A computer program 1130 includes computer executable instructions that are executed by the associated processor 1110. The program 1130 may be stored in the ROM 1124. The processor 1110 may perform any suitable actions and processing by loading the program 1130 into the RAM 1122.

The embodiments of the present disclosure may be implemented by means of the program 1130 so that the device 1100 may perform any process of the disclosure as discussed with reference to Figs. 2 to 10. The embodiments of the present disclosure may also be implemented by hardware or by a combination of software and hardware.

In some embodiments, the program 1130 may be tangibly contained in a computer readable medium which may be included in the device 1100 (such as in the memory 1120) or other storage devices that are accessible by the device 600. The device 1100 may load the program 1130 from the computer readable medium to the RAM 1122 for execution. The computer readable medium may include any types of tangible non-volatile storage, such as ROM, EPROM, a flash memory, a hard disk, CD, DVD, and the like. Fig. 12 shows an example of the computer readable medium 1200 in form of CD or DVD. The computer readable medium has the program 1130 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the method 900 or 1000 as described above with reference to Figs. 9-10. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. A terminal device (101), comprising:
at least one processor; and
at least one memory storing instructions that, when executed by the at least one processor, cause the terminal device at least to:
receive, from a network device, transmission configuration information, wherein the transmission configuration information indicates concurrent transmissions over a same transmission resource for two or more Transmission Configuration Indicator, TCI, states;
receive, from the network device, a parameter defining association between the two or more TCI states and two or more configured sounding reference signal, SRS, resource sets, wherein each SRS resource set comprises one or more SRS resources; and
perform, based on the transmission configuration information, concurrent transmissions over the same transmission resource for the two or more TCI states.

2. The terminal device of Claim 1, wherein the two or more TCI states comprise a first TCI state associated with a first transmission resource and a second TCI state associated with a second transmission resource, and
wherein one of the first transmission resource and the second transmission resource is used as the same transmission resource over which the concurrent transmissions are performed.

3. The terminal device of Claim 1, wherein the same transmission resource over which the concurrent transmissions are performed is determined based on any of:
an indication, from the network device, indicating a TCI state or a transmission resource for concurrent transmissions;
an activation order of the first TCI state and second TCI state indicated by the network device;
an indication order of the first TCI state and second TCI state indicated by the network device;
a priority of the first TCI state and second TCI state.

4. The terminal device of Claim 2 or 3, wherein the terminal device is further caused to:
replace association between the second transmission resource and the second TCI state by associating a first transmission resource with the second TCI state.

5. The terminal device of Claim 4, wherein the association between the second transmission resource with the second TCI state is replaced temporally.

6. The terminal device of any of Claims 1 to 5, wherein the terminal device is further caused to:
deactivate transmission resources other than the same transmission resource.

7. The terminal device of any of Claims 1 to 6, wherein the terminal device is further caused to:
obtain capabilities of antenna group or groups, wherein the antenna group or groups are associated with the two or more TCI states; and
determine one of transmission resources associated with a TCI state, wherein the TCI state associates with a least number of antenna ports among antenna groups.

8. The terminal device of any of Claims 1 to 7, wherein the transmission configuration information indicates periodic or aperiodic concurrent transmissions for reference signals, RS.

9. The terminal device of Claim 8, wherein the aperiodic concurrent transmissions for RS is triggered by
two pieces of configuration information, including two RS requests associated with a same reference resource set identity ID and a same SRS request trigger value; or
a DCI indication with a single DCI code point value corresponding to two or more SRS resource sets; or
a DCI indication containing a SRS request value, wherein the SRS request value is associated with a RS resource or RS resource set containing a flag indicating that the aperiodic concurrent transmissions are performed for the RS resource or the RS resource set; or
a DCI indication containing a flag indicating that aperiodic concurrent transmissions are performed for a RS resource or RS resource set.

10. The terminal device of any of Claims 1 to 9, wherein the transmission configuration information comprises first resource state configuration information, wherein the first resource state configuration information configures the terminal device with a first resource state concerning two or more transmission resource sets.

11. The terminal device of Claim 10, wherein the first resource state indicates that the two or more transmission resource sets share same transmission resources.

12. The terminal device of any of Claims 10 to 11, wherein the terminal device is further caused to:
obtain second resource state configuration information, wherein the second resource state configuration information configures the terminal device with a second resource state concerning two or more transmission resource sets; and
perform transmission in a different transmission mode from the concurrent transmissions.

13. A method at a terminal device (101), comprising:
receiving, from a network device, transmission configuration information, wherein the transmission configuration information indicates concurrent transmissions over a same transmission resource for two or more Transmission Configuration Indicator, TCI, states;
receiving, from the network device, a parameter defining association between the two or more TCI states and two or more configured sounding reference signal, SRS, resource sets, wherein each SRS resource set comprises one or more SRS resources; and
performing, based on the transmission configuration information, concurrent transmissions over the same transmission resource for the two or more TCI states.

14. A method at a network device (111), comprising:
generating transmission configuration information, wherein the transmission configuration information indicates concurrent uplink transmissions over a same transmission resource for two or more Transmission Configuration Indicator, TCI, states;
transmitting, to a terminal device, the transmission configuration information; and
transmitting, to the terminal device, a parameter defining association between the two or more TCI states and two or more configured sounding reference signal, SRS, resource sets, wherein each SRS resource set comprises one or more SRS resources.

15. A computer readable medium comprising program instructions that, when executed by an apparatus, cause the apparatus to perform at least the method of claim 13 or 14.

## Patentansprüche

1. Endgerät (101), umfassend:
mindestens einen Prozessor; und
mindestens einen Speicher, der Anweisungen speichert, die bei Ausführung durch den mindestens einen Prozessor das Endgerät mindestens zu Folgendem veranlassen:
Empfangen, von einem Netzwerkgerät, von Übertragungskonfigurationsinformationen, wobei die Übertragungskonfigurationsinformationen gleichzeitige Übertragungen über eine gleiche Übertragungsressource für zwei oder mehr Übertragungskonfigurationsindikator-, TCI-, Zustände anzeigen;
Empfangen, von dem Netzwerkgerät, eines Parameters, der eine Zuordnung zwischen den zwei oder mehr TCI-Zuständen und zwei oder mehr konfigurierten Sounding-Referenzsignal-, SRS-, Ressourcensätzen definiert, wobei jeder SRS-Ressourcensatz eine oder mehrere SRS-Ressourcen umfasst; und
Durchführen, basierend auf den Übertragungskonfigurationsinformationen, gleichzeitiger Übertragungen über die gleiche Übertragungsressource für die zwei oder mehr TCI-Zustände.

2. Endgerät nach Anspruch 1, wobei die zwei oder mehr TCI-Zustände einen ersten TCI-Zustand, der einer ersten Übertragungsressource zugeordnet ist, und einen zweiten TCI-Zustand, der einer zweiten Übertragungsressource zugeordnet ist, umfassen, und
wobei eine von der ersten Übertragungsressource und der zweiten Übertragungsressource als die gleiche Übertragungsressource verwendet wird, über die die gleichzeitigen Übertragungen durchgeführt werden.

3. Endgerät nach Anspruch 1, wobei die gleiche Übertragungsressource, über die die gleichzeitigen Übertragungen durchgeführt werden, basierend auf einem beliebigen von Folgendem bestimmt wird:
einer Anzeige von dem Netzwerkgerät, die einen TCI-Zustand oder eine Übertragungsressource für gleichzeitige Übertragungen anzeigt;
einer Aktivierungsreihenfolge des ersten TCI-Zustands und des zweiten TCI-Zustands, die von dem Netzwerkgerät angezeigt wird;
einer Anzeigereihenfolge des ersten TCI-Zustands und des zweiten TCI-Zustands, die von dem Netzwerkgerät angezeigt wird;
einer Priorität des ersten TCI-Zustands und des zweiten TCI-Zustands.

4. Endgerät nach Anspruch 2 oder 3, wobei das Endgerät ferner veranlasst wird zum:
Ersetzen einer Zuordnung zwischen der zweiten Übertragungsressource und dem zweiten TCI-Zustand durch Zuordnen einer ersten Übertragungsressource zu dem zweiten TCI-Zustand.

5. Endgerät nach Anspruch 4, wobei die Zuordnung zwischen der zweiten Übertragungsressource und dem zweiten TCI-Zustand zeitweilig ersetzt wird.

6. Endgerät nach einem der Ansprüche 1 bis 5, wobei das Endgerät ferner veranlasst wird zum:
Deaktivieren von Übertragungsressourcen, die von der gleichen Übertragungsressource verschieden sind.

7. Endgerät nach einem der Ansprüche 1 bis 6, wobei das Endgerät ferner veranlasst wird zum:
Erhalten von Fähigkeiten einer Antennengruppe oder von Antennengruppen, wobei die Antennengruppe oder die Antennengruppen den zwei oder mehr TCI-Zuständen zugeordnet sind; und
Bestimmen einer von Übertragungsressourcen, die einem TCI-Zustand zugeordnet sind, wobei der TCI-Zustand einer geringsten Anzahl von Antennenports unter Antennengruppen zugeordnet ist.

8. Endgerät nach einem der Ansprüche 1 bis 7, wobei die Übertragungskonfigurationsinformationen periodische oder aperiodische gleichzeitige Übertragungen für Referenzsignale, RS, anzeigen.

9. Endgerät nach Anspruch 8, wobei die aperiodischen gleichzeitigen Übertragungen für RS ausgelöst werden durch
zwei Teile von Konfigurationsinformationen, die zwei RS-Anforderungen umfassen, die einer gleichen Referenzressourcensatz-Identitäts-ID und einem gleichen SRS-Anforderungsauslösewert zugeordnet sind; oder
eine DCI-Anzeige mit einem einzelnen DCI-Codepunktwert, der zwei oder mehr SRS-Ressourcensätzen entspricht; oder
eine DCI-Anzeige, die einen SRS-Anforderungswert enthält, wobei der SRS-Anforderungswert einer RS-Ressource oder einem RS-Ressourcensatz zugeordnet ist, die bzw. der ein Flag enthält, das anzeigt, dass die aperiodischen gleichzeitigen Übertragungen für die RS-Ressource oder den RS-Ressourcensatz durchgeführt werden; oder
eine DCI-Anzeige, die ein Flag enthält, das anzeigt, dass aperiodische gleichzeitige Übertragungen für eine RS-Ressource oder einen RS-Ressourcensatz durchgeführt werden.

10. Endgerät nach einem der Ansprüche 1 bis 9, wobei die Übertragungskonfigurationsinformationen erste Ressourcenzustands-Konfigurationsinformationen umfassen, wobei die ersten Ressourcenzustands-Konfigurationsinformationen das Endgerät mit einem ersten Ressourcenzustand bezüglich zwei oder mehr Übertragungsressourcensätzen konfigurieren.

11. Endgerät nach Anspruch 10, wobei der erste Ressourcenzustand anzeigt, dass die zwei oder mehr Übertragungsressourcensätze gleiche Übertragungsressourcen gemeinsam nutzen.

12. Endgerät nach einem der Ansprüche 10 bis 11, wobei das Endgerät ferner veranlasst wird zum:
Erhalten von zweiten Ressourcenzustands-Konfigurationsinformationen, wobei die zweiten Ressourcenzustands-Konfigurationsinformationen das Endgerät mit einem zweiten Ressourcenzustand bezüglich zwei oder mehr Übertragungsressourcensätzen konfigurieren; und
Durchführen einer Übertragung in einem anderen Übertragungsmodus als den gleichzeitigen Übertragungen.

13. Verfahren an einem Endgerät (101), umfassend:
Empfangen, von einem Netzwerkgerät, von Übertragungskonfigurationsinformationen, wobei die Übertragungskonfigurationsinformationen gleichzeitige Übertragungen über eine gleiche Übertragungsressource für zwei oder mehr Übertragungskonfigurationsindikator-, TCI-, Zustände anzeigen;
Empfangen, von dem Netzwerkgerät, eines Parameters, der eine Zuordnung zwischen den zwei oder mehr TCI-Zuständen und zwei oder mehr konfigurierten Sounding-Referenzsignal-, SRS-, Ressourcensätzen definiert, wobei jeder SRS-Ressourcensatz eine oder mehrere SRS-Ressourcen umfasst; und
Durchführen, basierend auf den Übertragungskonfigurationsinformationen, gleichzeitiger Übertragungen über die gleiche Übertragungsressource für die zwei oder mehr TCI-Zustände.

14. Verfahren an einem Netzwerkgerät (111), umfassend:
Erzeugen von Übertragungskonfigurationsinformationen, wobei die Übertragungskonfigurationsinformationen gleichzeitige Uplink-Übertragungen über eine gleiche Übertragungsressource für zwei oder mehr Übertragungskonfigurationsindikator-, TCI-, Zustände anzeigen;
Übertragen, an ein Endgerät, der Übertragungskonfigurationsinformationen; und
Übertragen, an das Endgerät, eines Parameters, der eine Zuordnung zwischen den zwei oder mehr TCI-Zuständen und zwei oder mehr konfigurierten Sounding-Referenzsignal-, SRS-, Ressourcensätzen definiert, wobei jeder SRS-Ressourcensatz eine oder mehrere SRS-Ressourcen umfasst.

15. Computerlesbares Medium, umfassend Programmanweisungen, die bei Ausführung durch eine Vorrichtung die Vorrichtung veranlassen, mindestens das Verfahren nach Anspruch 13 oder 14 durchzuführen.

## Revendications

1. Dispositif terminal (101), comprenant :
au moins un processeur ; et
au moins une mémoire stockant des instructions qui, lorsqu'elles sont exécutées par l'au moins un processeur, amènent le dispositif terminal au moins à :
recevoir, à partir d'un dispositif de réseau, des informations de configuration de transmission, dans lequel les informations de configuration de transmission indiquent des transmissions concurrentes sur une même ressource de transmission pour deux états ou plus d'indicateur de configuration de transmission, TCI ;
recevoir, à partir du dispositif de réseau, un paramètre définissant une association entre les deux états TCI ou plus et deux ensembles ou plus de ressources de signal de référence de sondage, SRS, configurés, dans lequel chaque ensemble de ressources SRS comprend une ou plusieurs ressources SRS ; et
effectuer, sur la base des informations de configuration de transmission, des transmissions concurrentes sur la même ressource de transmission pour les deux états TCI ou plus.

2. Dispositif terminal selon la revendication 1, dans lequel les deux états TCI ou plus comprennent un premier état TCI associé à une première ressource de transmission et un deuxième état TCI associé à une deuxième ressource de transmission, et
dans lequel l'une de la première ressource de transmission et de la deuxième ressource de transmission est utilisée comme la même ressource de transmission sur laquelle les transmissions concurrentes sont effectuées.

3. Dispositif terminal selon la revendication 1, dans lequel la même ressource de transmission sur laquelle les transmissions concurrentes sont effectuées est déterminée sur la base de l'un quelconque de :
une indication, provenant du dispositif de réseau, indiquant un état TCI ou une ressource de transmission pour des transmissions concurrentes ;
un ordre d'activation du premier état TCI et du deuxième état TCI indiqué par le dispositif de réseau ;
un ordre d'indication du premier état TCI et du deuxième état TCI indiqué par le dispositif de réseau ;
une priorité du premier état TCI et du deuxième état TCI.

4. Dispositif terminal selon la revendication 2 ou 3, dans lequel le dispositif terminal est en outre amené à :
remplacer une association entre la deuxième ressource de transmission et le deuxième état TCI en associant une première ressource de transmission au deuxième état TCI.

5. Dispositif terminal selon la revendication 4, dans lequel l'association entre la deuxième ressource de transmission et le deuxième état TCI est remplacée temporairement.

6. Dispositif terminal selon l'une quelconque des revendications 1 à 5, dans lequel le dispositif terminal est en outre amené à :
désactiver des ressources de transmission autres que la même ressource de transmission.

7. Dispositif terminal selon l'une quelconque des revendications 1 à 6, dans lequel le dispositif terminal est en outre amené à :
obtenir des capacités d'un groupe ou de groupes d'antennes, dans lequel le groupe ou les groupes d'antennes sont associés aux deux états TCI ou plus ; et
déterminer l'une de ressources de transmission associées à un état TCI, dans lequel l'état TCI est associé à un plus petit nombre de ports d'antenne parmi des groupes d'antennes.

8. Dispositif terminal selon l'une quelconque des revendications 1 à 7, dans lequel les informations de configuration de transmission indiquent des transmissions concurrentes périodiques ou apériodiques pour des signaux de référence, RS.

9. Dispositif terminal selon la revendication 8, dans lequel les transmissions concurrentes apériodiques pour des RS sont déclenchées par
deux éléments d'informations de configuration, comprenant deux demandes RS associées à une même identité ID d'ensemble de ressources de référence et à une même valeur de déclenchement de demande SRS ; ou
une indication DCI ayant une valeur de point de code DCI unique correspondant à deux ensembles ou plus de ressources SRS ; ou
une indication DCI contenant une valeur de demande SRS, dans lequel la valeur de demande SRS est associée à une ressource RS ou à un ensemble de ressources RS contenant un drapeau indiquant que les transmissions concurrentes apériodiques sont effectuées pour la ressource RS ou l'ensemble de ressources RS ; ou
une indication DCI contenant un drapeau indiquant que des transmissions concurrentes apériodiques sont effectuées pour une ressource RS ou un ensemble de ressources RS.

10. Dispositif terminal selon l'une quelconque des revendications 1 à 9, dans lequel les informations de configuration de transmission comprennent des premières informations de configuration d'état de ressource, dans lequel les premières informations de configuration d'état de ressource configurent le dispositif terminal avec un premier état de ressource concernant deux ensembles ou plus de ressources de transmission.

11. Dispositif terminal selon la revendication 10, dans lequel le premier état de ressource indique que les deux ensembles ou plus de ressources de transmission partagent les mêmes ressources de transmission.

12. Dispositif terminal selon l'une quelconque des revendications 10 à 11, dans lequel le dispositif terminal est en outre amené à :
obtenir des secondes informations de configuration d'état de ressource, dans lequel les secondes informations de configuration d'état de ressource configurent le dispositif terminal avec un second état de ressource concernant deux ensembles ou plus de ressources de transmission ; et
effectuer une transmission dans un mode de transmission différent des transmissions concurrentes.

13. Procédé au niveau d'un dispositif terminal (101), comprenant :
la réception, à partir d'un dispositif de réseau, d'informations de configuration de transmission, dans lequel les informations de configuration de transmission indiquent des transmissions concurrentes sur une même ressource de transmission pour deux états ou plus d'indicateur de configuration de transmission, TCI ;
la réception, à partir du dispositif de réseau, d'un paramètre définissant une association entre les deux états TCI ou plus et deux ensembles ou plus de ressources de signal de référence de sondage, SRS, configurés, dans lequel chaque ensemble de ressources SRS comprend une ou plusieurs ressources SRS ; et
la réalisation, sur la base des informations de configuration de transmission, de transmissions concurrentes sur la même ressource de transmission pour les deux états TCI ou plus.

14. Procédé au niveau d'un dispositif de réseau (111), comprenant :
la génération d'informations de configuration de transmission, dans lequel les informations de configuration de transmission indiquent des transmissions concurrentes en liaison montante sur une même ressource de transmission pour deux états ou plus d'indicateur de configuration de transmission, TCI ;
la transmission, à un dispositif terminal, des informations de configuration de transmission ; et
la transmission, au dispositif terminal, d'un paramètre définissant une association entre les deux états TCI ou plus et deux ensembles ou plus de ressources de signal de référence de sondage, SRS, configurés, dans lequel chaque ensemble de ressources SRS comprend une ou plusieurs ressources SRS.

15. Support lisible par ordinateur comprenant des instructions de programme qui, lorsqu'elles sont exécutées par un appareil, amènent l'appareil à exécuter au moins le procédé selon la revendication 13 ou 14.
